# EUROPÄISCHE PATENTSCHRIFT

(11) **EP 0 957 813 B1**
(45) Veröffentlichungstag und Bekanntmachung des Hinweises auf die Patenterteilung: **11.04.2001**
(21) Anmeldenummer: 97950122.8
(22) Anmeldetag: 06.11.1997
(51) Int. Cl.: A61C 13/00, A61C 13/06

(54) **SCHICHTMATERIAL FÜR STÜTZKÖRPER FÜR DENTALE PROTHESEN, STÜTZKÖRPER UND VERFAHREN ZUR HERSTELLUNG EINES STÜTZKÖRPERS**
STRATIFIED MATERIAL FOR SUPPORT PARTS FOR DENTAL PROSTHESIS, SUPPORT PARTS AND METHOD FOR THE PRODUCTION OF A SUPPORT PART
MATERIAU STRATIFIE POUR PIECES D'APPUI POUR PROTHESES DENTAIRES, PIECES D'APPUI ET PROCEDE DE FABRICATION DE CELLES-CI

(30) Priorität: 07.11.1996 CH 274896
(43) Veröffentlichungstag der Anmeldung: 24.11.1999
(73) Patentinhaber: Casellini, Fernando, 7002 Chur (CH)
(72) Erfinder: CASELLINI, Renzo, CH-7002 Chur (CH); CASELLINI, Fernando, CH-7002 Chur (CH)
(74) Vertreter: Kaminski, Susanne, Dr.
(86) Internationale Anmeldenummer: EP9706139
(87) Internationale Veröffentlichungsnummer: WO9819621

(56) Entgegenhaltungen:
- WO-A-89/04640
- WO-A-91/11153
- WO-A-94/08783
- FR-A- 2 090 395
- FR-A- 2 624 370
- US-A- 2 551 812

## Beschreibung

Die vorliegende Erfindung bezieht sich auf ein Schichtmaterial für Stützkörper für dentale Prothesen nach dem Oberbegriff des Anspruchs 1, auf einen Stützkörper für dentale Prothesen mit einem solchen Schichtmaterial und auf ein Verfahren zur Herstellung eines solchen Stützkörpers.

Unter dentalen Prothesen im Sinne der Erfindung sind alle möglichen Formen von Zahnersatz zu verstehen, wie Prothesen oder Prothesenelemente als Zahnersatz in teilbezahnten oder zahnlosen Kiefern, aber auch künstliche Zähne, Kronen und Brückenelemente. Unter freitragenden Prothesen bzw. Prothesenelementen versteht man technische Zahnbehelfe, die aus mindestens zwei miteinander verbundenen künstlichen Zähnen (einschliesslich der dafür notwendigen tragenden, bzw. anderweise funktionellen Elemente) bestehen, wobei diese nach der Entnahme aus der dafür vorgesehenen Kieferposition ihre gegenseitige Position und Abstand einhalten.

Besagte Prothesen bzw. Prothesenelemente können - nach vorheriger Anpassung durch entsprechend ausgebildetes Fachpersonal (Zahnarzt etc.) - entweder vom Prothesenträger selbst auf einfache Art in den Mund eingesetzt bzw. daraus entfernt werden oder mittel- bzw. unmittelbar derart am Kiefer befestigt sein, dass sie nur durch erwähntes Fachpersonal eingesetzt bzw. entfernt werden können. Die Prothese kann auf der Mundschleimhaut, auf Restzähnen und/oder zahntechnischen Elementen aufliegen. Zur Befestigung oder Stabilisierung der Prothese können verschiedene zahntechnische Vorkehrungen oder Elemente vorgesehen sein.

Ein Prothesenkörper besteht im allgemeinen aus künstlichen Zähnen, die mit einer Trägerbasis, die direkt auf dem mit Schleimhaut überzogenen Kiefer sitzt, verbunden sind oder die auf der Trägerbasis montiert sind. Die künstlichen Zähne sind üblicherweise zahnfarben und haben ebenso wie die Trägerbasis, die in der Regel aus zahnfleischfarbenem Kunststoff besteht, eine funktionelle und eine ästhetische, bzw. kosmetische Aufgabe. Zur Verstärkung, Bruchminderung, Stabilisierung, Aufnahme von zahntechnischen Elementen oder aus entsprechenden Gründen kann für die dentale Prothese eine zusätzliche Verstärkung notwendig sein. Das als Stützkörper dienende Verstärkungsgerüst kann vorgefertigt vorliegen oder speziell für eine einzelne Prothese angefertigt werden und wird in der Regel bei der Herstellung der dentalen Prothese mit einpolymerisiert, in einzelnen Fällen aber auch in einen ausgehärteten Prothesenkörper nachträglich eingebaut.

Heute gebräuchliche Verstärkungen werden meist als Metallgerüste ausgeführt, die entweder auf der Schleimhaut aufliegen und/oder teilweise bzw. ganz im Prothesenkörper integriert sind. Zur Herstellung dieser Metallgerüste stehen verschiedene Metalle, bzw. Legierungen, sowie unterschiedliche Herstellungsverfahren zur Verfügung. Solcherart gefertigte Metallgerüste können zwar eine sehr hohe Festigkeit und Formstabilität erreichen, erweisen sich aber gleichzeitig sowohl in bezug auf die Anwendung als auch in bezug auf die Herstellung verschiedentlich als nachteilig.

So ergibt sich aus der Anwendung eines Metalls im wässrigen, je nach Essgewohnheiten und/oder persönlicher Disposition unterschiedlich sauren oder alkalischen, oralen Milieu grundsätzlich ein Problem, wenn gleichzeitig auch andere Metalle in der Mundhöhle verwendet werden (z.B. andere zahntechnische Behelfe, wie beispielsweise Befestigungselemente für die Prothese etc. ). Auf Grund der unterschiedlichen Stellung zweier verschiedener Metalle in der elektrochemischen Spannungsreihe kommt es dabei über den als Elektrolyt wirkenden Speichel zur Ausbildung von Korrosionsströmen, wodurch Teile des unedleren Metalls in Lösung gehen. Dadurch kann das durch den Einbau von Metallen (insbesondere der Metalle der V. bis VIII. Nebengruppe) nicht unbeträchtliche Risiko einer Unverträglichkeit erhöht sein.

Neben der Gefahr einer Biounverträglichkeit ergibt sich bei Metallgerüsten zur Verstärkung dentaler Prothesen ein ästhetisches Problem, da diese bei einer sich beispielsweise aus räumlichen Erfordernissen ergebenden, dünnen Kunststoffverblendung metallisch durchschimmern, was besonders in anterioren Bereichen den optischen Eindruck stört.

Neben den heute gebräuchlichen Verstärkungsgerüsten aus Metall sind Anwendungen und Verfahren in der dentalen Prothetik bekannt, bei denen unterschiedliche Faserwerkstoffe zur Verstärkung des Kunststoffteiles verwendet werden, wie beispielsweise in der EP-B1-0230 394, der WO 91/11153 oder der US-A-5,425,640 beschrieben. Mit diesen Verfahren konnten wesentlich leichtere und mit dem Stützgerüst dauerhaft verbundene Prothesen realisiert werden. Die dabei verwendeten Fasern (Polyethylen-, Aramid- und andere Fasern) werden allerdings in einer ähnlich aufwendigen Weise wie oben beschrieben in mechanisch geformte Hohlräume des Kunststoffkörpers der dentalen Prothese eingelegt und mit dieser anschliessend chemisch verbunden.

Das Ausformen eines Stützkörpers für eine dentale Prothese erfolgt im allgemeinen direkt auf einem Arbeitsmodell oder auf einem durch Dublieren hergestellten Modell, um es der gewünschten, individuellen Struktur der Prothese anzupassen. Bei Verwendung von Glas- bzw. anderen abrasiven Fasern ist - ähnlich wie bei der Verwendung von metallischen Gerüstteilen darauf zu achten, dass Massnahemn zur Distanzhaltung des Stützkörpers vom Zahnfleich getroffen werden, um Verletzungen des Zahnfleisches zu vermeiden bzw. ausreichenden Tragekomfort zu gewährleisten. Üblicherweise wird dazu bei der Erstellung des Stützkörpers ein von diesem unabhängiges Zwischenglied zwischen Modell und Faserschicht zur Distanzhaltigkeit vorgesehen, sodass der fertige Stützkörper danach nicht direkt auf das Zahnfleich aufzuliegen kommen wird. Wird zwar auf diese Weise die Verletzungsgefahr für das Zahnfleisch vermindert und der Tragekomfort gegebenenfalls verbessert, so ist doch andererseits das Einschleusen und Festsetzen von Essensresten möglich. Auch sind bei der Herstellung des Stützkörpers zwei voneinander an sich unabhängige Herstellungsschritte aufeinander abzustimmen. Sind an einem solchen Stützkörper nachträglich Korrekturen vorzunehmen, so kann es, wenn beispielsweise ein zu knapper Sitz durch Nachschleifen korrigiert werden soll, zu einem Aufreissen und Verletzen des Fasergewebes kommen

Aufgabe der vorliegenden Erfindung ist es, die dem Stand der Technik anhaftenden Probleme zu überwinden, was durch die Bereitstellung eines Schichtmaterials ermöglicht wird, bei dem die kennzeichnenden Merkmale des Anspruchs 1 verwirklicht sind, bzw. durch die Bereitstellung eines Stützkörpers mit einem solchen Schichtmaterial, sowie durch ein Verfahren zur Herstellung eines derartigen Stützkörpers.

Ausgangsmaterialien für die "Grundschicht", die erste Schicht des Schichtmaterials, aus dem der erfindungsgemässe Stützkörper geformt ist bzw. geformt wird, können Faserglas-, Aramid-, PE-, i-c und andere Fasern unterschiedlicher Länge, in geflochtener, gekreuzter oder anders verwobener oder gewirkter Ausführung sein. Beispielsweise können dazu mit Vernetzungsmitteln bzw. mit vorvernetztem Kunststoff imprägnierte Fasergewebe verwendet werden, die in unterschiedlichen, auf den jeweiligen Anwendungszweck abgestimmten Formen (rechteckig, ellipsoid, als halbierte Ovale, hufeisenförmig) vorgefertigt vorliegen können. Diese erste Schicht kann auch als mehrere Faserschichten umfassen, als "eine Schicht" im Sinne der Erfindung soll eine gegebenenfalls auch mehrlagige Schicht verstanden sein, solange sie aus gleichartigem Material besteht. Diese erste Schicht ist nun - wenigstens einseitig, und zwar an der dem Kieferbereich zuzuwendenden Seite - mit einer weiteren, zweiten, Schicht versehen, die aus weichbleibendem em Material besteht, wie beispielsweise das von der Firma Myerson, Harrow, Middlesex, Great Britain, unter der Bezeichnung "Soft Denture Liner" vertriebene Material. Ein solches Material zeichnet sich dadurch aus, dass es weich bleibt, unter Druck nachgibt und eine bestimmte Rückstellfähigkeit besitzt. Solcher Materialien werden als weichbleibende Unterfütterung für Prothesen verwendet. Im folgenden soll unter dem Begriff "weich" für das Material der zweiten Schicht ein derartiges Material verstanden werden. Wenn dieses direkt auf dem Kiefer aufliegt, wird ein verbesserter Tragekomfort bewirkt. Auch wird die Anpassung der Prothese an die Kiefersituation erleichtert, da sie sich in einem gewissen Mass an die Kieferform anpasst, und beim Tragen als dämpfend wirkender Polster fungieren kann. Korrekturen, die ein nachträgliches Beschleifen des bereits ausgeformten Stützkörpers von der basalen Seite her erforderlich machen, sind hier ohne Beschädigung der Faserschicht möglich, da sie in der zweiten Schicht vorgenommen werden können.

Die zweite Schicht kann zwar die gleiche Erstreckung aufweisen wie die erste Schicht und sozusagen vollumfänglich als Doppelschicht mit letzterer vorliegen, doch ist die Funktionsweise des Schichtmaterials für bestimmte Anwendungen in gleicher Weise gegeben, wenn die zweite Schicht die erste Schicht auch nur teilweise abdeckt.

Ein Stützkörper mit einem derartigen Schichtmaterial ermöglicht die Anfertigung vollständiger Zahnprothesen für zahnlose Kiefer, von partiellen Zahnprothesen für teilbezahnte Kiefer (Lückengebiss), von Zahnprothesen über Halte-, Retentions- oder Verankerungselemente bzw. von Implantaten in abnehmbarer oder verschraubter Ausführung.

Werden - insbesondere auch freitragende - dentale Prothesen bzw. Prothesenelemente auf einem derartigen Stützkörper aufgebaut, so sind einerseits die gute und dauerhaft feste chemische Verbindbarkeit der Faserverstärkung mit den verwendeten dentalen Kunststoffen (z.B. PMMA [Polymethacrylsäuremethylester]) und andererseits neben den oben dargestellten Vorteilen, die Distanzhaltigkeit und den Tragekomfort betreffend, weitere Möglichkeiten gegeben. So ist damit die vollständige Distanzauffüllung der Basis bis zu den künstlichen Zähnen möglich, die zweite Schicht kann also zur Zahnfleischgestaltung eingesetzt werden. Wird der Stützkörper zusätzlich noch an der oralen Seite mit einer dritten Schicht, der Abdeckung, abgedeckt, die zweckmässigerweise aus insbesondere dentalem Kunststoff besteht, so kann auf diese Weise die Bisslage- und Bisshöhenfixierung bei der Anfertigung von Vollprothesen über diese Schicht - in besonders rationeller Weise bei einer Bearbeitung im Mund des Patienten - festgelegt werden und in diese die künstlichen Zähne eingebracht werden.

Die Herstellung einer dentalen Prothese kann auf unterschiedliche, für den jeweiligen Anwendungszweck optimierte Art erfolgen. Der Stützkörper kann der anatomischen Form des Kiefers angepasst werden und dabei durch die gegebene Formbarkeit eine dem gesamten Prothesenkörper oder seinen Teilen ähnliche Geometrie und Ausdehnung erhalten. Der Stützkörper kann entweder fertig verarbeitet und auspolymerisiert für den weiteren Aufbau der Prothese verwendet oder in einem noch nicht bzw. vorpolymerisierten und somit individuell verformbaren Zustand verarbeitet und erst vor oder beim Erstellen des Prothesenkörpers aus- bzw. fertig polymerisiert (d.h. gehärtet) werden.

Die Herstellung des Stützkörpers erfolgt gegebenenfalls direkt auf dem Arbeitsmodell oder einem durch Dublieren hergestellten Modell, den individuellen Strukturen der Prothese entsprechend, oder auch, wie bereits weiter oben erwähnt, als Formanpassung auch im Mund des Patienten direkt. Letztere Möglichkeit ist gerade aufgrund der Verwendung eines erfindungsgemässen Schichtmaterials für den Stützkörper gegeben, da Reizungen, die gegebenenfalls als Folge von direktem Hautkontakt mit bekannten Faserschichtstoffen auftreten können, durch das Vorsehen der zweiten Schicht, die vorzugsweise auch oral anzuordnen sein wird, unterbunden werden können.

Solche Stützkörper können bereits vorgefertigt, gegebenenfalls in einer modularen Form vorliegen, für die meisten Belange einfach und schnell einsetzbar, da sie farblos transluzent, zahn-, zahnfleischfarben oder in einer beliebigen Kombination eingefärbt sein können. Selbst in kritischen Fällen (z.B. dünne Gesamtdicke in anterioren Partien) ist somit auch eine optisch ansprechende Gestaltung möglich. Auch ist hierbei die Verwendung von auspolymerisierten bzw. nur vorpolymerisierten Elementen möglich, wobei letztere im Labor plastisch nachgeformt und/oder erst nach dem Einbau in die Prothese auspolymerisiert werden.

Vorgefertigte Glasfaserelemente können somit vorteilhaft mit einer basal angebrachten Kuststoffbasis versehen sein.Auf dem Modell sind dann nur noch die darüberliegenden, bzw. anterioren und posterioren Partien zu formen.

Prothesenelemente mit solchen Stützkörpern können auch mit andersartig hergestellten Stützkörpern, zum Beispiel solchen mit Metallgerüst, wie in traditionell hergestellten Prothesenelementen, verbunden werden, insbesondere in Fällen, in denen nicht auf metallische Verstärkungsgerüste verzichtet werden kann. So können beispielsweise die anterioren Teile von partiellen Zahnprothesen (wie z.B. Modellgussprothesen) für teilbezahnte Kiefer (Lückengebiss) durch Prothesenelemente mit erfindungsgemässen Stützkörpern gebildet werden, die statt einer ästhetisch störenden, metallischen Verstärkung den zahnfleisch- bzw. zahnfarbenen Kunststoff in beliebiger farblicher Anpassung stützen, während die posterioren Partien weiterhin als Metallgerüst ausgeführt werden. Auch in Fällen, wo aus Platz- oder anderen Gründen auf eine Verblendung von an der Zahnbasis angebrachten, metallischen Halteelementen verzichtet wird, kann auf Grund des geringen Platzbedarfs und der leichten Formbarkeit des erfindungsgemässen Stützkörpers eine durch diesen getragene Verblendung angebracht werden. Der Stützkörper dieser Prothesenelemente kann dabei mit dem nun kleineren und daher leichteren Metallgerüst durch mechanische Retention oder auf chemische Weise verbunden werden.

Die Erfindung wird wird im folgenden anhand von Zeichnungen rein beispielhaft beschrieben. Es zeigen:
- Fig.1a und 1b: mögliche Abfolgen zur Herstellung eines erfindungsgemässen Stützkörpers als Basis für eine Prothese;
- Fig.2: eine Anpass- und Härtevorrichtung zur Herstellung der Basis und
- Fig.3: eine Prothese für ein Lückengebiss mit Pfeilerzähnen.

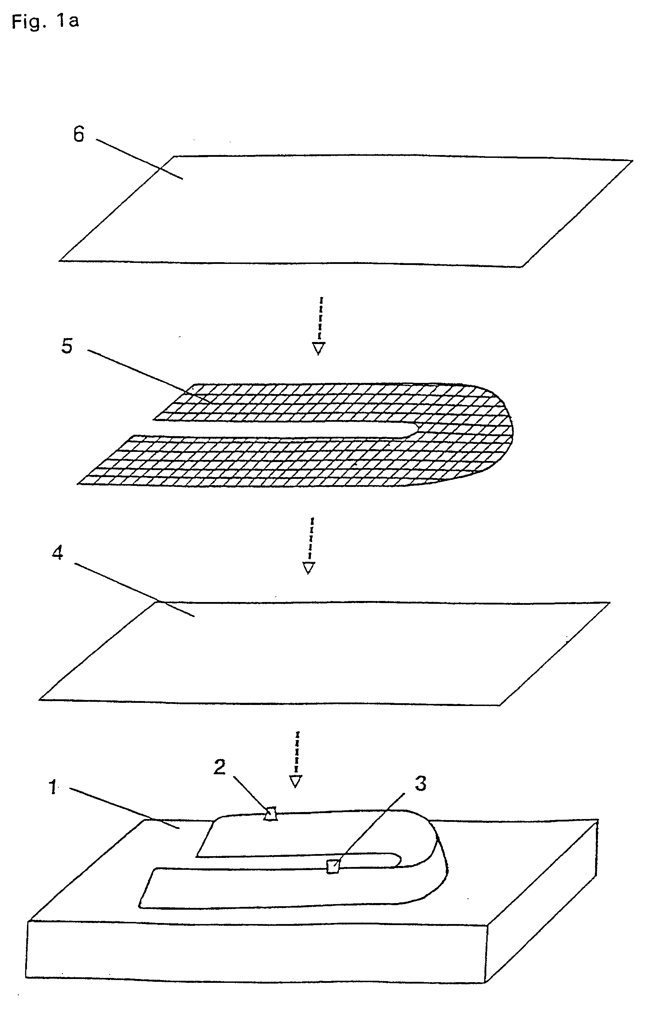

In Fig. 1a ist eine mögliche Abfolge zur Herstellung eines Stützkörpers für eine Prothese dargestellt. Auf ein Modell 1 eines unbezahnten oder mit einzelnen Zähnen 2, bzw. mit künstlichen Fixpunkten 3 versehenen Kiefers wird eine Schicht, im folgenden als zweite Schicht 4 bezeichnet, aufgebracht. Diese zweite Schicht 4 kann aus einem weichen Material bzw. einer Kombination aus weichem mit hartem Material bestehen, aus - gegebenenfalls dentalem - Kunststoff oder auch aus einem Material wie Silikon. Die Dicke der Schicht wird dem jeweiligen Anwendungszweck entsprechend zu wählen sein, ebenso wie die Grösse der flächigen Erstreckung derselben. Darüber wird eine weitere Schicht, im folgenden als erste Schicht 5 bezeichnet, aufgebracht. Diese kann beispielsweise aus einer durch Glas- oder andere Fasern verstärkten, gegebenenfalls auch mehrlagigen Matte bestehen, die mit dentalem Kunststoff, Kunststoff-Keramik-Verbundwerkstoffen (im folgenden Composit genannt) oder ähnlichem Material vorvernetzt ist. Im allgemeinen wird diese erste Schicht noch nicht auspolymerisiert und noch formbar sein.

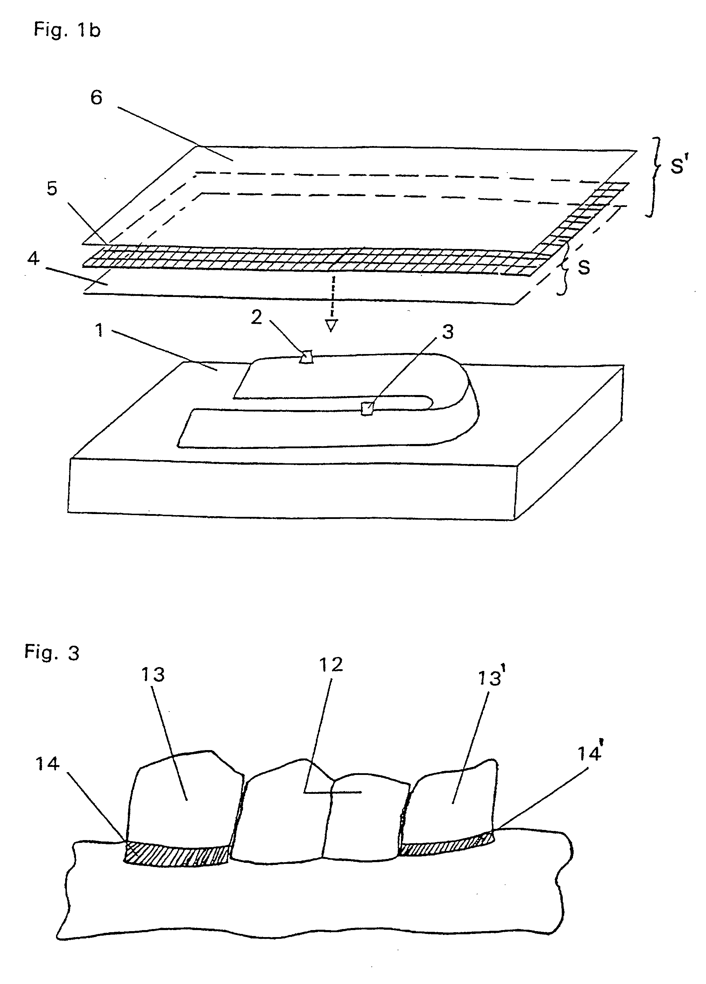

Wie aus Fig.1b zu ersehen, können erste und zweite Schicht 4 und 5 als Schichtmaterial S - und dies vereinfacht die Herstellung in rationeller Weise - bereits vor dem Aufbringen auf das Modell miteinander verbunden vorliegen, und gemeinsam an die Konturen des Modells 1 angepasst werden

Nach Anpassen und eventuellem Zurechtschneiden der beiden Schichten 4 und 5, was gegebenenfalls für jede der beiden Schichten - insbesondere aber, wenn als Schichtmaterial S vorliegend, gemeinsam - geschieht, wird diese Grundstruktur für den Stützkörper 45 gehärtet; eventuell werden weitere Formkorrekturen (z.B. durch Nachschleifen) angebracht. Der solcherart hergestellte Stützkörper kann anschliessend vollständig oder auch nur oral mit einer Kunststoffabdeckung 6 versehen werden. Darauf können die übrigen Teile der Prothese in bekannter Weise aufgebaut und fertiggestellt werden.

Diese Abdeckung 6, kann aber auch - wie auch die beiden Schichten 4 und 5 - bereits mit diesen verbunden als Schichtmaterial S'vorliegen, und dieses in einem einzigen Herstellungsschritt auf dem Modell 1 oder auch im Mund des Patienten geformtund anschliessend gehärtet werden, wie in Fig.1b gezeigt.

Es kann also ein erfindungsgemässer Stützkörper sowohl schrittweise (beispielsweise zweite Schicht 4 aus Kunststoff als Distanzhalter - erste Schicht 5, beispielsweise auch als mehrlagige Faserschicht - Abdeckung 6 aus Kunststoff) auf dem Modell geformt und gehärtet werden als auch in einem einzige Arbeitgang, bei dem ein Schichtmaterial S' aus zweiter Schicht 4, erster Schicht 5 und Abdeckung 6, gegebenenfalls vorgeformt, fertig angepasst und ausgehärtet wird.

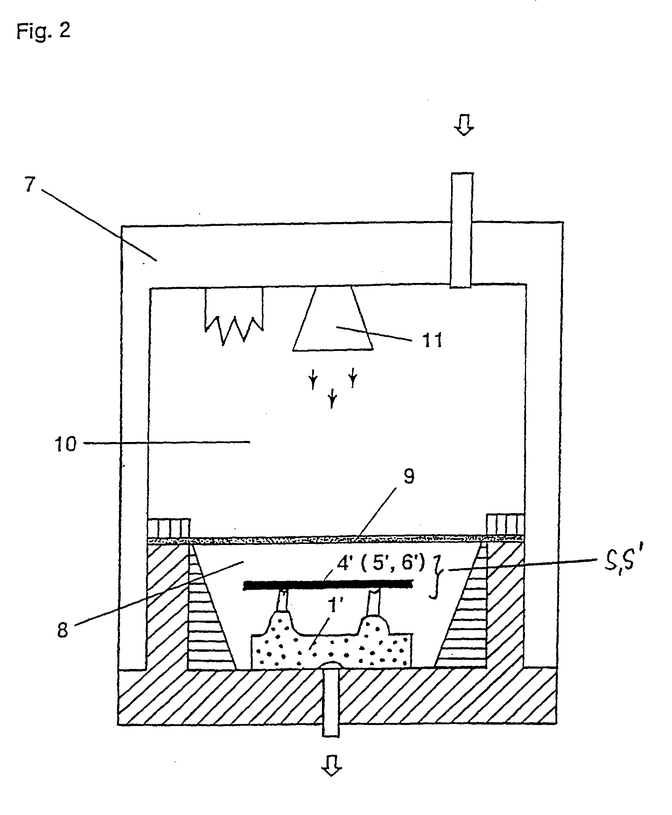

Dies kann, wie in Fig.2 dargestellt, in halbautomatischer Weise geschehen, indem nach Auflegen einer alss Distanzhalter dienenden zweiten Schicht 4' aus einer geeignet zugeschnittenen Folie aus beispielseweise dentalem Kunststoff das Modell 1' in eine dafür vorgesehene Vorrichtung 7 gestellt wird, in der durch Anlegen eines Vakuums auf der dem Modell zugewandten Seite 8 einer flexiblen, die Vorrichtung 7 teilenden Membranfolie 9 und/oder durch Erzeugen eines Überdrucks auf der modellabgewandten Seite 10 jener Membranfolie 9, diese den Kunststoff formschlüssig an das Kiefermodell anpresst, worauf der so erzeugte Abguss durch geeignete Bestrahlungseinrichtungen 11, bzw. durch Druck, Wärme oder Autopolymerisation, oder durch eine Kombination der besagten Behandlungen, in oder ausserhalb der Vorrichtung vor- oder durchgehärtet wird.

Anschliessend wird in ähnlicher Weise die erste Schicht 5' aus Fasergewebe aufgebracht, über der zweiten Schicht (Distanzhalter)4' an das Modell angepasst und vor- oder durchgehärtet. Das abschliessende Aufbringen der Abdeckung 6' kann analog den vorhergehenden Schritten geschehen. Werden die einzelnen Schichten nur vorgehärtet, dann kann in einem abschliessenden Schritt die gesamte Struktur durchgehärtet werden. Und in ebensolcher Weise ist der dann nur mehr einfache Arbeitsschritt gegeben, wenn ein bereits aus wenigstens den beiden Schichten 4' und 5' bestehendes Schichtmaterial S (S') - das gegebenenfalls auch bereits die Abdeckung 6' umfasst - in dieser Vorrichtung 7 ausgeformt und gehärtet wird.

Vorgefertigte Stützkörper als Prothesenbasis für unterschiedliche Anwendungen können ohne Abdeckung als modulare Teile vorliegen; die Abdeckung kann nachträglich gemeinsam mit den entsprechenden individuellen Prothesenaufbauten durch das jeweilige Zahnlabor aufgebracht werden.

Statt der Verwendung von Überdruck und/oder Vakuum können in einer einfacheren Variante des Verfahrens die Folien aus Kunststoff bzw. Fasergewebe durch eine geeignete plastische Masse (beispielsweise Silikon) an das Modell angepresst werden. In entsprechender Weise kann das auch im Mund direkt geschehen. Dies kann jedoch unter bestimmten Umständen zu einer etwas ungenaueren Ausbildung des Abdrucks führen.

Auf prinzipiell ähnliche Weise können sowohl komplette Prothesen, wie beispielhaft in Fig.1, als auch Lückengebissprothesen 12 für teilbezahnte Kiefer, wie beispielhaft in Fig.3 dargestellt, angefertigt werden. Eine solche Lückengebissprothese 12 kann zum Beispiel zwischen zwei Pfeilerzähnen 13, 13', an denen bei Bedarf an der Zahnbasis Metallklammern 14, 14' zur Befestigung einer posterioren Verankerung (auf der Abbildung nicht sichtbar) angebracht sein können, frei tragend befestigt werden.

## Patentansprüche

1. Schichtmaterial (S,S') für Stützkörper für dentale Prothesen und Prothesenelemente mit wenigstens einer ersten Schicht (5,5') aus einem härtbaren oder ausgehärteten Material, bestehend aus mit Vernetzungsmittel(n) und/oder mit Kunststoff imprägnierten Fasern unterschiedlicher Länge, in geflochtener, gekreuzter oder anders verwobener oder gewirkter Ausführung, dadurch gekennzeichnet, dass die erste Schicht (5,5') wenigstens einseitig wenigstens teilweise mit einer zweiten Schicht (4,4') aus weichem, formbarem Material, beispielsweise Kunststoff oder Silikon, verbunden ist.

2. Schichtmaterial nach Anspruch 1, dadurch gekennzeichnet, dass es formbar, im speziellen an ein Kiefermodell (1,1'), an ein Duplikat eines Kiefermodells oder an einen Kiefer anpassbar, ist.

3. Schichtmaterial nach Anspruch 1, dadurch gekennzeichnet, dass das Fasergewebe der ersten Schicht (5,5') mit dentalem Kunststoff oder einem Kunststoff-Keramik-Verbundwerkstoff vorvernetzt ist.

4. Stützkörper für dentale Prothesen und Prothesenelemente mit einem Schichtmaterial (S,S') nach einem der vorhergehenden Ansprüche, dadurch gekennzeichnet, dass die zweite Schicht (4,4') an der dem Kiefer zuzuwendenden Seite angeordnet ist.

5. Stützkörper nach Anspruch 4, dadurch gekennzeichnet, dass die erste Schicht (5,5'), wenigstens an der oralen Seite mit einer Abdeckung (6,6') abgedeckt ist, die aus - insbesondere dentalem - Kunststoff besteht.

6. Stützkörper nach Anspruch 4 oder 5, dadurch gekennzeichnet, dass er vorgeformt und insbesondere nachformbar ist.

7. Zahnersatz, Prothese bzw. Prothesenelement, insbesondere freitragend, mit einem Stützkörper nach einem der Ansprüche 4 bis 6, wobei die zweite Schicht (4,4') insbesondere als Distanzauffüllung ausgebildet ist.

8. Verfahren zur Herstellung eines Stützkörpers (45) für dentale Prothesen nach einem der Ansprüche 4 bis 6, dadurch gekennzeichnet, dass eine zweite Schicht (4,4') aus weichem, formbarem Material als Distanzhalter auf ein Modell (1,1') eines Kiefers oder Kieferabschnitts oder auf den Kiefer selbst aufgebracht wird, und anschliessend eine erste Schicht (5,5') darauf aufgebracht wird, die im wesentlichen aus härtbaren, mit Vernetzungsmittel(n) und/oder mit Kunststoff imprägnierten Fasern unterschiedlicher Länge, in geflochtener, gekreuzter oder anders verwobener oder gewirkter Ausführung, besteht, worauf die erste Schicht (5,5') entsprechend den Konturen des Modells (1,1') bzw. des Kiefers - insbesondere gemeinsam mit der zweiten Schicht (4,4') - geformt und stabilisiert wird.

9. Verfahren nach Anspruch 8, dadurch gekennzeichnet, dass die zweite Schicht (4,4') aus einem dentalen Kunststoff besteht und mit der ersten Schicht (5,5') dauerhaft verbunden wird.

10. Verfahren zur Herstellung eines Stützkörpers (45) nach einem der Ansprüche 4 bis 6, dadurch gekennzeichnet, dass ein Schichtmaterial (S,S') nach einem der Ansprüche 1 bis 4 auf ein Modell (1, 1') oder ein Duplikat eines Modells eines Kiefers oder Kieferabschnitts, gegebenenfalls auf den Kiefer selbst aufgebracht wird, und anschliessend entsprechend den Konturen des Modells (1,1') bzw. des Kiefers geformt und stabilisiert wird.

11. Verfahren nach einem der Ansprüche 8 bis 10, dadurch gekennzeichnet, dass die erste Schicht (5,5') mit Ausnahme von Flächen, die bei Bedarf direkt mit einem oder mehreren anderen Stützkörpern verbunden werden, wenigstens an der oralen Seite, gegebenenfalls allseitig, mit einer Abdeckung (6,6') aus Kunststoff versehen wird.

12. Verfahren nach Anspruch 8, dadurch gekennzeichnet, dass die zweite Schicht (4, 4') aus Kunststoff oder Silikon, gegebenenfalls in Form von einzelnen Schichtstücken, besteht und insbesondere als Distanzauffüllung dient.

## Claims

1. Stratified material (S, S') for support parts for dental prostheses and prosthetic elements having at least one first layer (5, 5') of a hardenable or hardened material, consisting of braided, crossed or otherwise woven or knitted fibres of different lengths which are impregnated with crosslinking agent(s) and/or with plastics, characterized in that the first layer (5, 5') is connected on at least one side at least partly to a second layer (4, 4') of soft, shapeable material, for example plastic or silicone.

2. Stratified material according to Claim 1, which is shapeable, especially adaptable to a maxillary model (1, 1'), to a duplicate of a maxillary model or to a jaw.

3. Stratified material according to Claim 1, characterized in that the fibre fabric of the first layer (5, 5') is precrosslinked with dental plastic or with a plastic-ceramic composite.

4. Support part for dental prostheses and prosthetic elements having a stratified material (S, S') according to any of the preceding Claims, characterized in that the second layer (4, 4') is arranged on the side which is to face the jaw.

5. Support part according to Claim 4, characterized in that the first layer (5, 5') is covered at least on the oral side with a covering (6, 6') which consists of - in particular dental - plastic.

6. Support part according to Claim 4 or 5, which is preshaped and in particular subsequently shapeable.

7. Denture, prosthesis or prosthetic element, in particular self-supporting, having a support part according to any of Claims 4 to 6, the second layer (4, 4') being formed in particular as a distance filler.

8. Method for the production of a support part (45) for dental prostheses according to any of Claims 4 to 6, characterized in that a second layer (4, 4') of soft, shapeable material is applied as a spacer to a model (1, 1') of a jaw or maxillary section or to the jaw itself and then a first layer (5, 5') is applied thereon, which first layer essentially comprises hardenable, braided, crossed or otherwise woven or knitted fibres of different lengths which are impregnated with crosslinking agent(s) and/or with plastic, after which the first layer (5, 5') is shaped and stabilized according to the contours of the model (1, 1') or of the jaw - in particular together with the second layer (4, 4').

9. Method according to Claim 8, characterized in that the second layer (4, 4') consists of a dental plastic and is permanently bonded to the first layer (5, 5').

10. Method for the production of a support part (45) according to any of Claims 4 to 6, characterized in that a stratified material (S, S') according to any of Claims 1 to 4 is applied to a model (1, 1') or a duplicate of a model of a jaw or maxillary section, optionally the jaw itself, and is then shaped and stabilized according to the contours of the model (1, 1') or of the jaw.

11. Method according to any of Claims 8 to 10, characterized in that the first layer (5, 5'), with the exception of areas which if required are connected directly to one or more other support parts, is provided at least on the oral side, optionally all round, with a covering (6, 6') of plastic.

12. Method according to Claim 8, characterized in that the second layer (4, 4') consists of plastic or silicone, optionally in the form of individual layer sections, and in particular serves as a distance filler.

## Revendications

1. Matériau stratifié (S, S') pour pièces d'appui pour prothèses dentaires et éléments de prothèses, avec au moins une première couche (5, 5') en matériau durcissable ou durci, constitué de fibres de différentes longueurs, imprégnées à l'aide de réticulant(s) et/ou de matière synthétique, en réalisation tressée, croisée ou autrement tissée ou tricotée, caractérisé en ce que la première couche (5, 5') est reliée au moins partiellement sur une face à une deuxième couche (4, 4') en matériau conformable souple, par exemple une matière synthétique ou du silicone.

2. Matériau stratifié selon la revendication 1, caractérisé en ce qu'il est conformable, adaptable spécialement à un modèle de mâchoire (1, 1'), à un double d'un modèle de mâchoire ou à une mâchoire.

3. Matériau stratifié selon la revendication 1, caractérisé en ce que le tissu à fibres de la première couche (5, 5') est préréticulé avec de la matière synthétique dentaire ou un matériau composite synthétique-céramique.

4. Pièce d'appui pour prothèses dentaires et éléments de prothèses avec un matériau stratifié (S, S') selon l'une des revendications précédentes, caractérisée en ce que la deuxième couche (4, 4') est disposée sur la face tournée vers la mâchoire.

5. Pièce d'appui selon la revendication 4, caractérisée en ce que la première couche (5, 5') est couverte, au moins sur la face orale, d'un recoupement (6, 6') constitué de matière synthétique - en particulier, de qualité dentaire.

6. Pièce d'appui selon la revendication 4 ou 5, caractérisée en ce qu'elle est préformée et est en particulier reformable.

7. Prothèse dentaire, prothèse ou élément de prothèse, en particulier en porte-à-faux, avec une pièce d'appui selon l'une des revendications 4 à 6, la deuxième couche (4, 4') étant réalisée en particulier sous la forme de remplissage des distances.

8. Procédé de fabrication d'une pièce d'appui (45) pour prothèses dentaires selon l'une des revendications 4 à 6, caractérisé en ce qu'une deuxième couche (4, 4') en matériau conformable souple, faisant office de support d'espacement, est appliquée sur un modèle (1, 1') d'une mâchoire ou un tronçon de mâchoire, ou sur la mâchoire elle-même, et une première couche (5, 5') étant ensuite appliquée dessus, constituée essentiellement de fibres durcissables, imprégnées avec un ou des agents de réticulation et/ou avec de la matière synthétique, les fibres étant de différentes longueurs, en réalisation tressée, croisée ou autrement tissée ou tricotée, suite à quoi la première couche (5, 5') est formée et stabilisée de manière correspondante aux contours du modèle (1, 1') ou de la mâchoire - en particulier, conjointement avec la deuxième couche (4, 4').

9. Procédé selon la revendication 8, caractérisé en ce que la deuxième couche (4, 4') est constituée d'une matière synthétique de qualité dentaire et est reliée durablement à la première couche (5, 5').

10. Procédé de fabrication d'une pièce d'appui (45) selon l'une des revendications 4 à 6, caractérisé en ce qu'un matériau en couche (S, S') selon l'une des revendications 1 à 4 est appliqué sur un modèle (1, 1') ou un double d'un modèle d'une mâchoire, ou un tronçon de mâchoire, le cas échéant, sur la mâchoire elle-même, et est ensuite formé et stabilisé de manière correspondante aux contours du modèle (1, 1') ou de la mâchoire.

11. Procédé selon l'une des revendications 8 à 10, caractérisé en ce que la première couche (5, 5') est munie, à l'exception des surfaces qui, en cas de besoin, sont reliées directement à une ou plusieurs autres pièces d'appui, au moins sur la face orale, le cas échéant de tous côtés, à un recouvrement (6, 6') réalisé en matière synthétique.

12. Procédé selon la revendication 8, caractérisé en ce que la deuxième couche (4, 4') est constituée de matière synthétique ou de silicone, le cas échéant sous la forme de pièces de couches individuelles et, en particulier, de remplissage des distances.
